# EUROPEAN PATENT APPLICATION

(11) **EP 4 117 303 A1**
(43) Date of publication of application: **11.01.2023**
(21) Application number: 21768306.9
(22) Date of filing: 11.03.2021
(51) Int. Cl.: H04R 1/10

(54) **METHOD FOR IDENTIFYING COVER OPENING/CLOSING OF CHARGING BOX, EARBUD, CHARGING BOX, AND SYSTEM**

(30) Priority: 11.03.2020 CN 202010165034
(71) Applicant: GUANGDONG OPPO MOBILE TELECOMMUNICATIONS CORP., LTD., Dongguan, Guangdong 523860 (CN)
(72) Inventor: LIU, Shaobin, Dongguan, Guangdong 523860 (CN)
(74) Representative: Taor, Simon Edward William
(86) International application number: PCT/CN2021/080101
(87) International publication number: WO 2021/180148

(57) **Abstract**

Disclosed is a method for identifying the cover opening/closing of a charging box. The method for identifying the cover opening/closing of a charging box comprises: an earbud receiving check information sent by a charging box; a second processor executing a first preset identification policy according to the check information; and the second processor determining cover opening/closing state information of the charging box according to an identification result, wherein the check information is used for representing the cover opening/closing state information of a charging box cover, and the identification result is obtained by executing the first preset identification policy.

## Description

### CROSS REFERENCE OF RELATED APPLICATION

This application claims priority to Chinese Application No. 202010165034.1, entitled "METHOD FOR IDENTIFYING COVER OPENING/CLOSING OF CHARGING BOX, EARBUD, CHARGING BOX, AND SYSTEM", filed on March 11, 2020. The entire disclosures of the above applications are incorporated herein by reference.

### FIELD OF THE DISCOSURE

The present disclosure relates to an earphone technology, and more particularly, to a method, an earphone, a charging box, a system and a computer readable medium, for identifying an opening/closing state of a charging box cover.

### BACKGROUND

The statements here merely provide background information related to the present application and do not necessarily constitute conventional art.

In general, True wireless Stereo (TWS) earphones can detect the opening/closing state information of the charging box cover through sensors arranged on the earphones. For example, a Hall sensor can be set on each of the left and right earplugs, and two magnets are correspondingly placed on the cover of the charging box. Through the Hall effect, the earphones can identify the opening/closing state information of the charging box. However, the above-mentioned solution requires additional sensors, which is expensive, occupies a large space and is not reliable.

### SUMMARY

One objective of an embodiment of the present disclosure is to provide a method, an earphone, a charging box, a system and a computer readable medium, for identifying an opening/closing state of a charging box cover.

According to an embodiment of the present disclosure, a method for identifying an opening/closing state of a cover of a charging box, used in an earphone comprising a first processor and a second processor coupled to the first processor, is disclosed. The method comprises: receiving, by the earphone, a detection information sent by the charging box; executing, by the second processor, a first identification policy according to the detection information to generate an identification result; and determining, by the second processor, an opening/closing state information of the cover of the charging box according to the identification result. The detection information is configured to represent the opening/closing state information of the cover of the charging box.

According to another embodiment of the present disclosure, a method for identifying an opening/closing state of a cover of a charging box, operable in an earphone comprising a first processor and a second processor coupled to the first processor, is disclosed. The method comprises: receiving, by the earphone, a detection information sent by the charging box; executing, by the first processor, a second identification policy according to the detection information to generate an identification result; and determining, by the second processor, a cover state information of the charging box according to the identification result, wherein the detection information is used to represent the cover state information of the charging box.

According to another embodiment of the present disclosure, a method for identifying an opening/closing state of a cover of a charging box, operable in a charging box comprising a first processor and a second processor coupled to the first processor is disclosed. The method comprises: detecting an cover state information of the charging box and generating a detection information according to the cover state information; and sending the detection information to the earphone, where the detection information is used to instruct the second processor to execute a first identification policy according to the detection information or to instruct the first processor to execute a second identification policy according to the detection information; wherein the detection information is further used to instruct the second processor to determine cover state information of the charging box according to an identification result; wherein the detection information is used to represent cover state information of the charging box; and the identification result is obtained by executing one of the first identification policy and the second identification policy.

The method for identifying a cover state of a charging box, could avoid adding additional sensors to detect the opening/closing state information of the cover of the charging box. This could reduce the size and the structural complexity of the earphone. Furthermore, by implementing the first processor and/or the second processor to communicate with the charging box, it could quickly and reliably synchronize the opening/closing state information of the cover of the charging box with the earphone such that the accuracy of the opening/closing state information of the cover of the charging box identified by the earphone could be ensured.

The details of embodiments of the present disclosure are set forth in the accompanying drawings and the description below. Other features, objects and advantages of the present application will become apparent from the description, drawings and claims.

### BRIEF DESCRIPTION OF THE DRAWINGS

To describe the technical solutions in the embodiments of this application more clearly, the following briefly introduces the accompanying drawings required for describing the embodiments. Apparently, the accompanying drawings in the following description show merely some embodiments of this application, and a person of ordinary skill in the art may still derive other drawings from these accompanying drawings without creative efforts.
Fig. 1 is a diagram of an application environment of a method for identifying an opening/closing state of a cover of a charging box according to an embodiment of the present disclosure.
Fig. 2 is a flow chart of a method for identifying an opening/closing state of the cover of the charging box according to an embodiment of the present disclosure.
Fig. 3 is a flow chart of a method for identifying the opening/closing state of the cover of the charging box according to an embodiment of the present disclosure.
Fig. 4 is a flow chart of a method for identifying the opening/closing state of the cover of the charging box according to an embodiment of the present disclosure.
Fig. 5 is a flow chart of a method for identifying the opening/closing state of the cover of the charging box according to an embodiment of the present disclosure.
Fig. 6 is a flow chart of a method for identifying the opening/closing state of the cover of the charging box according to an embodiment of the present disclosure.
Fig. 7 is a flow chart of a method for identifying the opening/closing state of the cover of the charging box according to an embodiment of the present disclosure.
Fig. 8 is a flow chart of a method for identifying the opening/closing state of the cover of the charging box according to an embodiment of the present disclosure.
Fig. 9 is a flow chart of a method for identifying the opening/closing state of the cover of the charging box according to an embodiment of the present disclosure.
Fig. 10 is a flow chart of a method for identifying the opening/closing state of the cover of the charging box according to an embodiment of the present disclosure.

### DETAILED DESCRIPTION OF PREFERRED EMBODIMENTS

In order to make the objectives, technical solutions and advantages of the present disclosure more clear, the present disclosure will be further described in detail below with reference to the accompanying drawings and embodiments. It should be understood that the embodiments described herein are only used to explain the present disclosure, but not to limit the present disclosure.

In addition, the term "first", "second" are for illustrative purposes only and are not to be construed as indicating or imposing a relative importance or implicitly indicating the number of technical features indicated. These terms are only used to distinguish a first element from another element. For example, a first processor could be referred to as a second processor, and similarly, a second processor could be referred to as a first processor, without departing from the scope of this application. Both the first processor and the second processor are processors, but they are not the same processor.

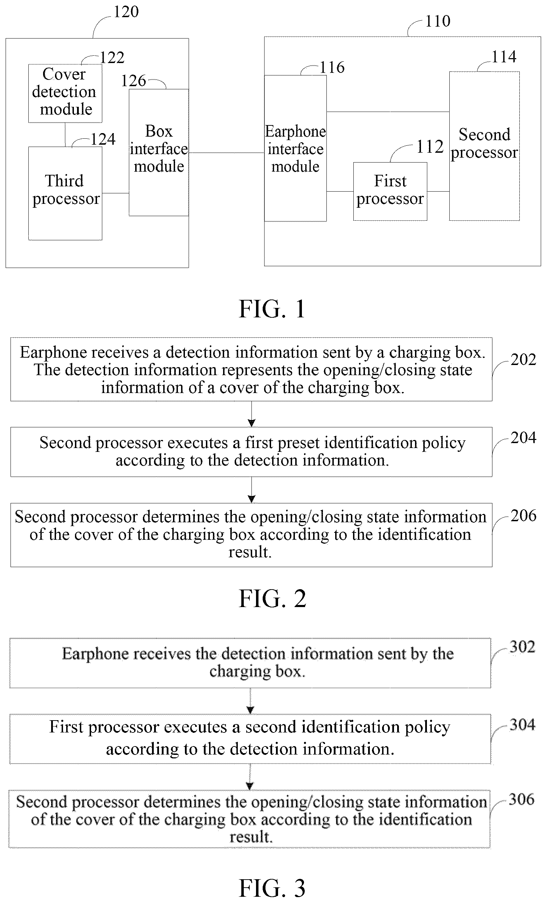

Please refer to Fig. 1. Fig. 1 is a diagram of an application environment of a method for identifying an opening/closing state of a cover of a charging box according to an embodiment of the present disclosure. The application environment comprises an earphone 110 and a charging box 120 for storing the earphone 110 and charging the earphone 110.

The earphone 110 could be a TWS earphone. The left and right ear plugs of the TWS earphone 110 can work independently by realizing the wireless separation of the left and right audio channels without cable connections. The earphone 110 comprises a housing and electronic components in the housing. The electronic components may include, but is not limited to, a first processor 112, a second processor 114, an earphone interface module 116, a memory, a power management integrated circuit, a battery, a radio frequency circuit, and an input device, sensors, an audio processing circuit, etc.

The first processor 112 and the second processor 114 are used to control the earphone interface module 116 for receiving or sending data from/to the external device and/or the charging box 120 to the external device and/or the charging box 120. The first processor 112 and the second processor 114 are used to control the data transmission between the memory and the external device or the charging box 120 and can be used to control the power management integrated circuit and the like. In an embodiment, the first processor 112 could be a controller such as an MCU (microcontroller unit), a CPU, or a single-chip microcomputer. The controller is configured with a plurality of functional pins, such as reset pins, level conversion pins, communication pins, etc. pins, etc. Each functional pin of the first processor 112 can be correspondingly connected to the second processor 114. In an embodiment, the second processor 114 could be a Bluetooth chip, or other communication processors that can wirelessly communicate with external devices. The first processor 112 can also be a Bluetooth chip, and the second processor 114 could be a microcontroller unit.

The earphone interface module 116 comprises a plurality of contacts, e.g. pogo pins. The plurality of contacts are exposed on the housing. In an embodiment, two contacts can be used to realize the two functions of charging and communication. The two contacts can be used as both charging contacts and data transmission contacts. When they are used as data transmission contacts, they can be used to realize two-way data communication between the earphone 110 and the charging box 120 of the earphone 110. In an embodiment, three contacts can be used to realize the charging function and data communication function. Two contacts can be used as charging contacts, and one contacts can be used as a data transmission contact, so as to realize the two-way data transmission between the earphone 110 and the charging box.

In some embodiments, the charging box 120 can be used to store the earphones 110 and can also charge the earphones 110 when the earphones are placed in the charging box 120. Various built-in electronic components of the charging box 120 may comprise, but not limited to, a cover detection module 122, a third processor 124, a box interface module 126, a memory, a power management circuit, a battery, and the like.

The cover detection module 122 is used to detect an opening/closing state information of the cover of the charging box 120. The opening/closing state information of the cover of the charging box 120 includes cover opening information and cover closing information. The cover detection module 122 is connected to the third processor 124. The cover detection module 122 can detect the opening/closing state information of the cover. For example, the cover detection module 122 can generate the cover opening information after detecting that the box cover of the charging box 120 is opened and send the cover opening information to the third processor 124. In addition, the cover detection module 122 can generate the cover closing information after detecting that the cover of the charging box 120 is closed and send the cover closing information to the third processor 124.

In some embodiments, the cover detection module 122 comprises a Hall sensor and a magnet. When the charging box 120 of the earphone 110 is opened, the magnet is far away from the Hall sensor, and the opening/closing state information of the cover of the charging box 120 is determined by detecting the change of the signal of the Hall sensor. For example, a Hall sensor may be provided at the opening of the charging box 120, and a magnet may be provided at the upper cover of the charging box 120. In addition, in addition to detecting the opening/closing state information of the cover of the charging box 120 through a Hall sensor and a magnet, any other type of mechanical or electronic switch can also be used, including but not limited to momentary switches, capacitive sensors, optical sensors, and micro switches . (The opening/closing state is detected by the vibration of the charging box 120), and the contact switch (for example, the opening/closing state is determined by detecting the contact between the upper cover and the lower part).

The box interface module 126 comprises a plurality of contacts, e.g. pogo pins. In an embodiment, two contacts can be used to achieve the charging function and the communication function. The two contacts can be used as both charging contacts and data transmission contacts. In an embodiment, three contacts can also be used to achieve the charging and the communication functions. Two contacts can be used as charging contacts, and one contact can be used as a data transmission contact, so as to realize the two-way data transmission between the earphone 110 and the charging box 120.

When the earphone 110 is accommodated in the charging box 120, the plurality of contacts of the earphone interface module 116 can be connected to the plurality of contacts of the box interface module 126 in one-to-one correspondence. If two contacts or one contact is used as a data transmission contact, the two-way data communication between the earphone 110 and the charging box 120 can be realized based on the earphone interface module 116 and the box interface module 126. In an embodiment, after the third processor receives the opening/closing state information of the cover of the charging box 120, the opening/closing state information may be transmitted to the earphone 110 based on the earphone interface module 116 and the box interface module 126.

Fig. 2 is a flow chart of a method for identifying the opening/closing state of the cover of the charging box according to an embodiment of the present disclosure. The method for identifying the opening/closing state of the cover of the charging box in this embodiment is described by taking the operation on the earphone 110 in Fig. 2 as an example. The method for identifying the opening/closing state of the cover of the charging box comprises blocks 202 to 206.

Block 202: the earphone receives the detection information sent by the charging box. The detection information represents the opening/closing state information of the cover of the charging box.

In some embodiments, the first processor 112 and the second processor 114 can be respectively connected to the headphone interface module 116. When the earphone interface module 116 is connected to the box interface module 126, the two-way communication between the earphone 110 and the charging box 120 can be realized. That is, the charging box 120 can send the opening/closing state information to the earphone 110. At the same time, the earphone 110 can also send an identification request for verifying the authenticity of the information and a response message for feeding back the received information to the charging box 120.

The charging box 120 comprises a box detection module 122 for real-time detecting the opening/closing state information of the cover of the charging box. Here, the opening/closing state information includes the cover opening information and the cover closing information. In an embodiment, the cover detection module 122 can generate cover opening information after detecting that the cover of the charging box 120 is opened and send the cover opening information to the earphone 110 as the detection information. Furthermore, the cover detection module 122 can generate the cover closing information after detecting that the cover of the charging box 120 is closed and send the cover closing information to the earphone 110 as the detection information. The cover detection module 122 can generate the cover opening information after detecting that the cover of the charging box 120 is opened, and send the cover opening information as the detection information to the first processor 112 and the second processor 114 of the earphone 110. The cover detection module 122 can generate the cover closing information after detecting that the cover of the charging box 120 is closed, and send the cover closing information as detection information to the first processor 112 and the second processor 114 of the earphone 110.

In some embodiments, the step that the charging box 120 can send the detection information to the earphone 110 may specifically comprise: the charging box 120 can respectively send the detection information to the first processor 112 and the second processor 114 according to a preset timing.

In some embodiments, the charging box 120 can first send the detection information to the first processor 112. That is, the time when the charging box 120 sends the detection information to the first processor 112 is earlier than the time when the detection information is sent to the second processor 124. In other words, the time when the first processor 112 receives the detection information earlier than the time when the second processor 124 receives the detection information. The charging box 120 can also send the detection information to the second processor 124 first. That is, the time when the charging box 120 sends the detection information to the second processor 124 is earlier than the time when the detection information is sent to the first processor 112. In other words, the time when the second processor 124 receives the detection information is earlier than the time when the first processor 112 receives the detection information.

In some embodiments, the charging box 120 may send the detection information to the first processor 112 and the second processor 114 at the same time.

The timing can be understood as the time sequence in which the charging box 120 sends the detection information to the first processor 112 and the second processor 114 respectively, or the time sequence in which the first processor 112 and the second processor 114 respectively receive the detection information.

In some embodiments, the detection information can be represented by codes or pulses and communicated between the charging box 120 and the earphone 110. The detection information is represented by codes which can be one of or a combination of numbers, letters and characters. In an embodiment, when the opening/closing state information of the cover is the cover opening information, the detection information can be represented by 010. When the opening/closing state information of the cover is cover closing information, the detection information can be represented by 011. When the detection information is represented by pulses, it can be represented by different pulse numbers. In an embodiment, when the opening/closing state information of the cover is the cover opening information, it can be represented by three pulses. When the opening/closing state information of the cover is the cover closing information, it can be represented by four pulses.

In the embodiments of the present disclosure, the specific form of the detection information is not further limited, and may also be expressed in any other ways, which are not limited to the above-mentioned examples.

In some embodiments, the charging box 120 and the first processor 112 and the second processor 114 of the earphone 110 may pre-store the mapping relationship between the detection information and the code or the number of pulses. The charging box 120 may determine a specific representation for sending the detection information to the first processor 112 and the second processor 114 according to the detected cover opening information or cover closing information based on a mapping relationship. At the same time, the first processor 112 and the second processor 114 can also identify the opening/closing state information of the cover of the charging box according to the mapping relationship between the detection information and the code or the number of pulses.

Block 204: the second processor executes the first identification policy according to the detection information.

The first identification policy can be understood as an identification method in which the second processor 114 identifies the opening/closing state information of the cover of the charging box 120 according to the detection information. In an embodiment, the first identification policy may be that the second processor 114 receives the detection information sent by the charging box 120 and identifies the opening/closing state information of the cover of the charging box 120 according to the detection information. At the same time, the detection information received by the first processor 112 can also be acquired from the first processor 112, and the opening/closing state information of the cover of the charging box 120 can be identified according to the detection information. When executing the first identification policy, the second processor 114 may correspondingly acquire the identification result of identifying the opening/closing state information of the cover of the charging box 120 twice. The first identification policy may also be for the second processor 114 to identify the switch cover state information of the charging box 120 according to the received detection information, and send an identification request to the charging box 120 to request to verify whether the identification result is correct, when executing the first identification policy, the second processor 114 can correspondingly obtain the identification information fed back by the charging box 120 according to the identification result.

Block 206: the second processor determines the opening/closing state information of the cover of the charging box according to the identification result.

In some embodiments, when the second processor 114 executes the first identification policy and the second processor 114 correspondingly obtains two identification results for identifying the opening/closing state information of the cover of the charging box 120, the second processor 114 can compare the two identification results of the opening/closing state information of the cover of the charging box 120 to determine the opening/closing state information of the cover of the charging box 120.

In some embodiments, when the second processor 114 executes the first identification policy and the second processor 114 correspondingly obtains the identification information fed back by the charging box 120 according to the identification result, the second processor 114 can determine the cover state information of the charging box 120, i.e. opening/closing state information of the cover, according to the identification information.

As shown in Fig. 3, the method for identifying the opening/closing state of the cover of the charging box includes blocks 302 to 306.

Block 302: the earphone receives the detection information sent by the charging box.

Here, block 302 corresponds to block 202 in the aforementioned embodiment, and details are omitted herein.

Block 304: the first processor executes the second identification policy according to the detection information.

In some embodiments, the second identification policy may be that the first processor 112 receives detection information, identifies the opening/closing state information of the cover of the charging box 120 according to the detection information, and sends an identification request to the charging box 120 to request the charging box 120 to verify whether its identification result is correct. When executing the second identification policy, the first processor 112 may correspondingly acquire the identification information fed back by the charging box 120 according to the identification result, and then send a conversion signal to the second processor according to the identification information.

Block 306: the second processor determines the opening/closing state information of the cover of the charging box according to the identification result.

In some embodiments, when the first processor 112 executes the second identification policy and correspondingly obtains the identification information fed back by the charging box 120 according to the identification result, the first processor 112 can determine obtain the opening/closing state information of the cover of the charging box 120 according to the identification result and send the opening/closing state information of the cover of the charging box 120 to the second processor 114. Or, the second processor 14 could directly receive the above-mentioned identification information to determine the opening/closing state information of the cover of the charging box 120.

In some embodiments, both the first identification policy and the second identification policy can be correspondingly pre-stored in the earphone 110 and the charging box 120 and can be independently selected to identify the opening/closing state information of the cover of the charging box 120 according to user's requirements, their priorities, or a preset order pre-installed by the manufacturer. In the embodiments of the present disclosure, the selection of the first identification policy and the second identification policy is not limited.

The above-mentioned method for identifying the opening/closing state information of the cover of the charging box includes: the earphone 110 receives the detection information sent by the charging box 120; the second processor executes the first identification policy according to the detection information; and/or, the first processor executes the second identification policy according to the detection information; the second processor determines the opening/closing state information of the cover of the charging box according to the identification result, wherein the detection information is used to represent the opening/closing state information of the cover of the charging box, and the identification result is obtained by executing the first identification policy or the second identification policy. It can avoid adding an additional sensor on the earphone 110 to detect the opening/closing state information of the cover of the charging box 120, which significantly reduces the size and structural complexity of the earphone 110. Furthermore, by including the first processor 112 and the second processor 114 in the earphone 110 (like a dual insurance) to communicate with the charging box 120, the opening/closing state information of the cover of the charging box 120 could be quickly and reliably synchronized with the earphone 110, which effectively ensures the accuracy for the earphone 110 to identify the opening/closing state information of the cover of the charging box 120.

By utilizing the first processor 112 and the second processor 114 in the earphone 110 to identify the opening/closing state information of the cover of the charging box 120, it is possible to avoid the abnormality, crash, and poor real-time performance of the processor when only one processor is included, which may result in a failure to use the earphone 110 to identify the opening/closing state information of the cover of the charging box 120. Compared with the situation that only the first processor 112 (for example, a microcontroller unit) is utilized in the earphone 110, the method of this embodiment of the present disclosure can avoid the inaccuracy of the identification result caused by the weak performance of the first processor 112. Furthermore, it can also avoid any failure of identifying the opening/closing state information of the cover of the charging box 120 when the first processor 112 is abnormal or crashes. In addition, if only the second processor 114 (e.g., a Bluetooth chip) is included in the earphone 110, when the cover-opening action of the charging box 120 occurs during the start-up phase of the second processor 114, the start-up phase will take several hundreds of milliseconds to several seconds. The second processor 114 can communicate only after the second processor 114 starts up. If the earphone 110 is taken out by the user during the startup phase of the second processor 114, the communication between the earphone 110 and the charging box 120 cannot continue. The method of the application embodiment can avoid the situation that the earphone 110 cannot communicate with the charging box 120 to obtain the opening/closing state information of the cover of the charging box 120 due to the poor timeliness of the second processor 114. Furthermore, it can also avoid any failure of identifying the opening/closing state information of the cover of the charging box 120 when the second processor 114 is abnormal or crashes.

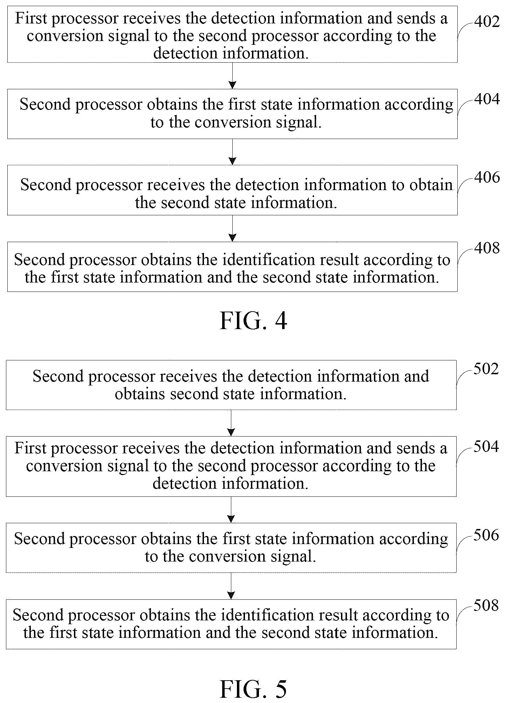

As shown in Fig. 4, in an embodiment, the block that the second processor 114 executes the first identification policy according to the detection information may comprise blocks 402 to 408.

Block 402: the first processor receives the detection information and sends a conversion signal to the second processor according to the detection information.

In some embodiments, the first processor 112 of the earphone 110 may receive the detection information and send a conversion signal to the second processor 114 according to the received detection information.

In some embodiments, the first processor 112 is a microcontroller unit and the second processor 114 is a Bluetooth chip as an example. The first processor 112 is electrically connected to the second processor 114. And data transmission can be implemented between the first processor 112 and the second processor 114.

In some embodiments, the first processor 112 can be a microcontroller unit with multiple functions. The first processor 112 could comprise multiple functional pins and could output different information to the second processor 114 through these functional pins. In an embodiment, the first processor 112 may be configured to have a cover detection pin, a reset pin, and the like. Taking the cover detection pin as an example, after the first processor 112 receives the detection information sent by the charging box 120, the first processor 112 could convert the detection information to generate a corresponding conversion signal and send the conversion signal to the second processor 114 through the cover detection pin.

In some embodiments , when the detection information received by the first processor 112 is "010" or "three pulses", it can be identified that the detection information is cover opening information based on the pre-stored mapping relationship. When the detection information received by the first processor 112 is "011" or "four pulses", the detection information can be identified as cover closing information based on the pre-stored mapping relationship. After the first processor 112 recognizes the detection information, it can control the voltage level of the cover detection pin to generate a conversion signal. It can be understood that the conversion signal may be voltage level information.

The first processor 112 and the second processor 114 pre-store the mapping relationship between the opening/closing state information of the cover of the charging box and the voltage level information. For example, if the voltage level of the cover detection pin is high, the detection information is the cover opening information. If the voltage level of the cover detection pin is low, the detection information is the cover closing information. Or, if the level state of the cover detection pin is high, the detection information is the cover closing information. And if the level state of the cover detection pin is low level, the detection information is the cover opening information.

In some embodiments, the high voltage level corresponds to the cover opening information, and the low level corresponds to the cover closing information. When the detection information received by the first processor 112 is the cover opening information, the first processor 112 may convert the received cover opening information so that the cover detection pin of the first processor 112 outputs a high-level (conversion) signal to the second processor 114. When the detection information received by the first processor 112 is the cover closing information, the first processor 112 may convert the received cover closing information so that the cover detection pin of the first processor 112 outputs a low level (conversion) signal to the second processor 114.

The conversion manner and the specific presentation manner of the conversion signal are not limited to the above examples, and the corresponding conversion signal may also be generated by encoding-decoding or other manners.

Block 404: the second processor obtains the first state information according to the conversion signal.

The second processor 114 may also be correspondingly provided with a plurality of pins, so as to be connected to the plurality of multi-function pins of the first processor 112 in a one-to-one correspondence. Or, the second processor 114 may also comprise a signal receiving pin connected to a plurality of multi-function pins of the first processor 112. When receiving any information sent by the first processor 112, the second processor 114 can identify the source of the information accordingly. That is, the second processor 114 can correspondingly identify which function pin of the first processor 112 sends the information.

In some embodiments, the second processor 114 also pre-stores the corresponding relationship between the detection information and the code or the number of pulses and the mapping relationship between the opening/closing state information of the cover of the charging box 120 and the voltage level information. When the second processor 114 receives the conversion signal sent by the first processor 112, the second processor 114 can obtain the first state information representing the opening/closing state information of the cover of the charging box according to the mapping relationship between the opening/closing state information of the cover of the charging box and the voltage level information. In an embodiment, when the received conversion signal is at a high voltage level, the first state information is the cover opening information. When the received conversion signal is at a low voltage level, the first state information is the cover closing information. The first state information may be understood as information for representing the opening/closing state information of the cover of the charging box 120, which is identified by the second processor 114 according to the conversion signal of the first processor 112.

Block 406: the second processor receives the detection information to obtain the second state information. Here, the second state information can be understood as information representing the opening/closing state information of the cover of the charging box 120, which is identified by the second processor 114 according to the detection information sent by the charging box 120.

In an embodiment, when the detection information received by the second processor 114 is "010" or "three pulses", the detection information can be identified as the cover opening information based on the pre-stored mapping relationship. That is, the second state information is the cover opening information. When the detection information received by the first processor 112 is "011" or "four pulses", the detection information can be identified as the cover closing information based on the pre-stored mapping relationship. That is, the second state information is the cover closing information.

Block 408: the second processor obtains the identification result according to the first state information and the second state information.

The second processor 114 could obtain the identification result according to the first state information and the second state information. In an embodiment, when the first state information and the second state information are the same, the identification result can be understood as the first state information or the second state information. When the first state information and the second state information are different, the identification result may be understood as the identification information obtained by the charging box verifying the first state information and/or the second state information.

In some embodiments, the second processor 114 could determine the opening/closing state information of the cover of the charging box 120 according to the identification result. In an embodiment, when the first state information and the second state information are the same, the second processor 114 could use the first state information or the second state information as the opening/closing state information of the cover of the charging box 120. When the first state information and the second state information are different, the second processor 114 could determine the opening/closing state information of the cover of the charging box 120 according to the identification information.

In some embodiments, block 402 is before block 406. That is, the time when the first processor 112 receives the detection information is earlier than the time when the second processor 114 receives the detection information.

In some embodiments, the first processor 112 can receive the detection information sent by the charging box 120 before the second processor 114. At this time, the first processor 112 can quickly respond and receive the detection information, which can prevent the second processor 114 not receiving the detection information sent by the charging box 120 when the earphone 110 has been taken out from the charging box 120 without being turned on, because the second processor 114 needs some time to start. The second processor 114 could acquire the opening/closing state information of the cover of the charging box 120 from the first processor 112 to ensure the accuracy of obtaining the opening/closing state information of the cover.

As shown in Fig. 5, in an embodiment, the block that the second processor executes the first identification policy according to the detection information may include Blocks 502 to 508.

Block 502: the second processor receives the detection information and obtains second state information.

Block 504: the first processor receives the detection information and sends a conversion signal to the second processor according to the detection information.

Block 506: the second processor obtains the first state information according to the conversion signal.

Block 508: the second processor obtains the identification result according to the first state information and the second state information.

In some embodiments, the time when the first processor 112 receives the detection information is later than the time when the second processor 114 receives the detection information. Specifically, when the earphone 110 is turned on (that is, when the second processor 114 is in a working state), the charging box 120 can first send the detection information to the second processor 114, which can improve the efficiency for the second processor 114 to identify the opening/closing state information of the cover of the charging box 120 such that the identification efficiency is raised.

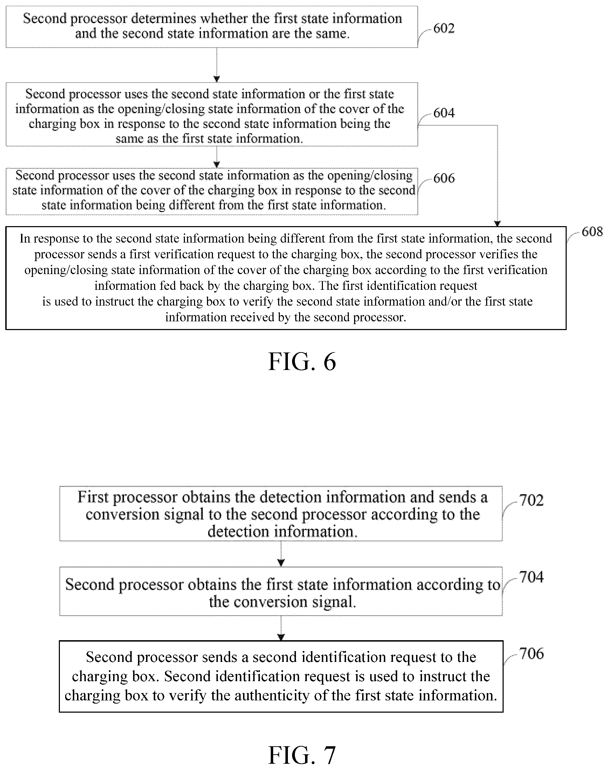

As shown in Fig. 6, in one embodiment, the block that the second processor obtains an identification result according to the first state information and the second state information and determines the opening/closing state information of the cover of the charging box according to the identification result includes Blocks 602 to 608.

Block 602: the second processor determines whether the first state information and the second state information are the same.

In some embodiments, the second processor 114 may receive the conversion signal from the first processor 112 and obtain the first state information according to the conversion signal. Moreover, the second processor 114 can directly receive the detection information sent by the charging box 120 and obtain the second state information according to the detection information. Here, the first state information and the second state information are both used to indicate the opening/closing state information of the cover of the charging box 120.

In some embodiments, if the detection information received by the second processor 114 is "010" or three pulses, the second processor 114 can identify that the detection information sent by the charging box 120 is the cover opening information. That is, the corresponding second state information is the cover opening information. If the detection information received by the second processor 114 is "011" or is four pulses, the second processor 114 can determine that the detection information sent by the charging box 120 is the cover closing information. That is, the corresponding second state information is the cover closing information.

If the conversion signal received by the second processor 114 is a high- voltage-level signal, the first state information is the cover opening information. If the conversion signal received by the second processor 114 is a low-voltage-level signal, the first state information is the cover closing information.

The second processor 114 could determine whether the second state information and the first state information are equal.

Block 604: when the second state information is the same as the first state information, the second processor uses the second state information or the first state information as the opening/closing state information of the cover of the charging box.

When the second state information and the first state information are both cover opening information or the second state information and the first state information are both cover closing information, the second processor 114 could determine the opening/closing state information of the cover of the charging box 120 according to the second state information or the first state information. In an embodiment, if the second state information or the first state information is the cover opening information, then the opening/closing state information of the cover of the charging box 120 is determined to be the cover opening information. If the second state information or the first state information is the cover closing information, then the opening/closing state information of the cover of the charging box 120 is determined to be the closing cover information.

Block 606: when the second state information is different from the first state information, the second processor uses the second state information as the opening/closing state information of the cover of the charging box.

When the second state information obtained by the second processor 114 is different from the first state information, the second processor 114 can directly obtain the second state information to identify the opening/closing state information of the cover of the charging box 120 because the first state information needs to be obtained based on the detection information received and converted by the first processor 112 and thus is more possible to have errors. When the second state information is different from the first state information, the second processor 114 uses the second state information as the opening/closing state information of the cover of the charging box 120. This can improve the identification efficiency.

Block 608: when the second state information is different from the first state information, the second processor sends a first identification request to the charging box, the second processor verifies the opening/closing state information of the cover of the charging box according to the first identification information fed back by the charging box, and the first identification request is used to instruct the charging box to verify the second state information and/or the first state information received by the second processor.

In one embodiment, when the second state information is different from the first state information, the second processor 114 sends a first identification request carrying the second state information or the first state information to the charging box 120. The first identification request is used to instruct the charging box 120 to verify the authenticity of the second state information or the first state information and feed back the first identification information according to the identification result. The second processor 114 receives the first identification information fed back by the charging box 120.

The first identification information includes a first identification result of the charging box 120 verifying the authenticity of the second state information and/or a second identification result of the charging box 120 verifying the authenticity of the first state information.

**The** second processor determining the state information of the cover of the charging box according to the first identification information fed back by the charging box, includes: the second processor identifying the state information of the cover of the charging box according to the first identification result or the second identification result.

In some embodiments, when the charging box 120 receives the first identification request, the charging box 120 could verify the authenticity of the second state information obtained by the second processor 114 according to the first identification request. For example, the second processor 114 can send the second state information to the charging box 120 in the form of codes or pulses, so that the charging box 120 can compare the received second state information with the opening/closing state information of the cover detected by the cover detection module 122. If the comparison result shows consistency, it means that the second state information is true. If the comparison result shows inconsistency, it means that the second state information is false. The charging box 120 may feed back the first identification information to the second processor 114 according to the identification result. Here, the first identification information may be used to represent the authenticity of the second state information.

In some embodiments, when the charging box 120 receives the first identification request, the charging box 120 could verify the authenticity of the first state information received by the second processor 114 according to the first identification request. For example, the second processor 114 can send the first state information to the charging box 120 in the form of codes or pulses, so that the charging box 120 can compare the received first state information with the opening/closing state information of the cover detected by the cover detection module 122. If the comparison result shows consistency, it means that the first state information is true. If the comparison result shows inconsistency, it means that the first state information is false. The charging box 120 could feed back the first identification information to the second processor 114 according to the identification result. Here, the first identification information may be used to represent the authenticity of the first state information.

In some embodiments, the first identification information can also be transmitted among the charging box 120, the first processor 112 and the second processor 114 in the form of codes or pulses. In an embodiment, if the detection information is true or the detection result is false, the first identification information may be transmitted in the form of "100" or a pulse. If the detection information is false or the detection result is true, the first identification information may be transmitted in the form of "001" or two pulses.

In some embodiments, the second processor 114 may determine the opening/closing state information of the cover of the charging box 120 according to the received first identification information. As an example, if the first identification information is "100" or a pulse, it indicates that the second state information obtained by the second processor 114 is true or the first state information is false. That is, the received conversion signal converted by the first processor 112 is inaccurate. In other words, it can be determined that the first processor 112 is abnormal or faulty and then the second state information could be used to determine the opening/closing state information of the cover of the charging box 120. If the first identification information is "001" or two pulses, it indicates that the second state information obtained by the second processor 114 is false or the first state information is true. In this case, the second processor 114 can determine the opening/closing state information of the cover of the charging box 120 according to the first state information.

In some embodiments, before the block that the second processor identifies the opening/closing state information of the cover of the charging box according to the first identification information fed back by the charging box, the method further includes: the first processor receives a reset instruction sent by the charging box, wherein the reset instruction is generated by the charging box when it verifies that the second state information is false; and the first processor performs a reset operation on the second processor according to the reset instruction so that the second processor receives the first identification information.

When the charging box 120 verifies the second state information according to the first identification request and the first identification result is false, it indicates that the second processor 114 may be abnormal. The charging box 120 could send a reset instruction to the first processor 112, and the first processor 112 may perform a reset operation on the second processor 114 according to the reset instruction, so as to restore the second processor 114 to a normal state. In an embodiment, the first processor 112 could comprise a reset pin. When the first processor 112 receives the reset instruction, the voltage level of the reset pin may be controlled to be inverted, so as to transmit the inverted voltage level to a reset terminal of the second processor 114 to perform the reset operation on the second processor 114. It should be noted that, in this embodiment, the reset operation performed by the first processor 112 on the second processor 114 is not limited to the above example. In the actual implementation, it could be performed in any other manners.

In some embodiments, the reset instruction can be implemented with codes or pulses. There is no limitation on the form of the reset instruction.

When the second processor 114 is back to its normal state, the second processor 114 can continue to receive the first identification information fed back by the charging box 120 and identify the opening/closing state information of the cover of the charging box 120 according to the first identification information.

In addition, when the first identification information represents that the second state information is false, it means that the second processor is abnormal and the second processor identifies the opening/closing state information of the cover of the charging box according to the first identification information fed back by the charging box. Or, the charging box sends the first identification information to the first processor, and then the first processor triggers the reset operation on the second processor according to the first identification information and continuously provides the second processor with a conversion signal representing the opening/closing state information of the cover of the charging box. In this way, after the reset operation, the second processor can obtain correct opening/closing state information of the cover of the charging box according to the conversion signal.

In some embodiments, the second processor 114 could identify the opening/closing state information of the cover of the charging box 120 according to the second state information and the first state information, so as to improve the accuracy of identifying the opening/closing state information of the cover of the charging box 120. Furthermore, the second processor 114 can send the second state information or the first state information to the charging box 120 to realize two-way communication with the charging box 120, so that the charging box 120 could know that the first processor 112/the second processor 114 receives the detection information. At the same time, the second state information or the first state information can be verified to avoid the situation that the first processor 112 does not respond to the detection information because of any abnormality. In this way, the identification accuracy can be improved.

As shown in Fig. 7, the block that the second processor executes the first identification policy according to the detection information includes Blocks 702 to 706.

Block 702: The first processor obtains the detection information and sends a conversion signal to the second processor according to the detection information.

Block 704: The second processor obtains the first state information according to the conversion signal.

Blocks 702 to 704 are in a one-to-one correspondence with Blocks 402 to 404 in the previous embodiment, and thus further illustrations are omitted here.

Block 706: The second processor sends a second identification request to the charging box, and the second identification request is used to instruct the charging box to verify the authenticity of the first state information (that is, to check whether the opening/closing state information of the cover represented by the first state information is correct). The charge box feeds back the second identification information according to the identification result. In one embodiment, the second identification information includes a third identification result indicative of the first state information being true and a fourth identification result indicative of the first state information being false.

In some embodiments, after the second processor 114 obtains the first state information according to the conversion signal, the second processor 114 sends a second identification request carrying the first state information to the charging box 120. When the charging box 120 receives the second identification request, the charging box 120 could verify the authenticity of the first state information obtained by the second processor 114 according to the second identification request. For example, the second processor 114 can send the first state information to the charging box 120 in the form of codes or pulses, so that the charging box 120 can compare the received first state information with the opening/closing state information of the cover of the charging box 120 detected by the cover detection module 122. If the comparison result shows consistency, it means that the first state information is true. In this case, the charging box 120 can feed back a third identification result to the second processor 114. Here, the second identification information is represented by the third identification result.

In some embodiments, the third identification result could be transmitted between the charging box 120 and the second processor 114 in the form of codes or pulses. In an embodiment, the third identification result may be transmitted in the form of "100" or one pulse. After the second processor 114 receives the third identification result of "100" or a pulse fed back by the charging box 120, the second processor 114 can identify the opening/closing state information of the cover of the charging box 120 according to the received first state information.

The charging box 120 compares the received first state information with the opening/closing state information of the cover of the charging box 120 detected by the box cover detection module 122. If the comparison result shows inconsistency, it means that the first state information is false and the charging box 120 can send the fourth identification result to the second processor 114. Here, the fourth identification result could also carry the detection information. The second processor 114 could identify the opening/closing state information of the cover of the charging box 120 according to the received detection information. The block that the second processor determines the opening/closing state information of the cover of the charging box according to the identification result includes: the second processor identifies the opening/closing state information of the cover of the charging box according to the second identification information fed back by the charging box.

In some embodiments, when the second identification information received by the second processor 114 refers to the third identification result representing that the first state information is true, it indicates that the first state information obtained by the second processor 114 is correct, and the second processor 114 can use the first state information as the opening/closing state information of the cover of the charging box 120.

In some embodiments, when the second identification information received by the second processor 114 refers to the fourth identification result representing that the first state information is false, it indicates that the first state information obtained by the second processor 114 is incorrect, and the second processor 114 may determine the opening/closing state information of the cover of the charging box 120 according to the fourth identification result or the detection information carried by the fourth identification result. In an embodiment, if the first state information is the cover closing information and the second identification information received by the second processor 114 refers to the fourth identification result representing that the first state information is false, the second processor 114 may determine that the opening/closing state information of the cover of the charging box 120 is the cover opening information based on the fourth identification result. The second processor 114 could further determine the opening/closing state information of the cover of the charging box 120 according to the detection information carried by the fourth identification result.

In some embodiments, after receiving the first state information, the second processor 114 can actively communicate with the charging box 120, so that the charging box 120 can verify the first state information received by the second processor 114 to determine the first state information is correct. This can improve the reliability of the second processor 114 in identifying the opening/closing state information of the cover of the charging box 120.

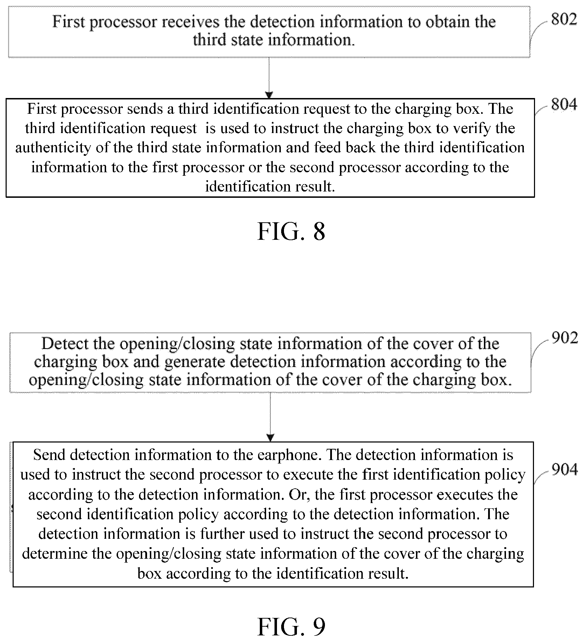

As shown in Fig. 8, the block that the first processor executes the second identification policy according to the first detection information includes Blocks 802 to 808.

Block 802: the first processor receives the detection information to obtain the third state information.

Here, the third state information may be understood as information for representing the opening/closing state information of the cover of the charging box 120, which is identified by the first processor 112 according to the detection information sent by the charging box 120.

In some embodiments, when the detection information received by the first processor 112 is "010" or "three pulses", based on the pre-stored mapping relationship, the first processor 112 could determine that the detection information is the cover opening information. That is, the third state information is the cover opening information. When the detection information received by the first processor 112 is "011" or "four pulses", based on the pre-stored mapping relationship, the first processor 112 could determine that the detection information is the cover closing information. That is, the third state information is the cover closing information.

Block 804: the first processor sends a third identification request to the charging box; the third identification request is used to instruct the charging box to verify the authenticity of the third state information and feed back the third identification information to the first processor or the second processor according to the identification result. Here, the third identification information may be different for different processors. The third identification information received by the first processor is the fifth identification result indicative of the detection information being true, and the third identification information received by the second processor is the sixth identification result indicative of the third state information being false. In one embodiment, after the first processor 112 receives the detection information, the first processor 112 sends a third identification request carrying the third state information to the charging box 120. When the charging box 120 receives the third identification request, the charging box 120 could verify the authenticity of the third state information obtained by the first processor 112 according to the third identification request. For example, the first processor 112 can send the detection information to the charging box 120 in the form of codes or pulses, so that the charging box 120 can compare the third state information with the opening/closing state information of the cover of the charging box 120 detected by the cover detection module 122. If the comparison result shows consistency, it means that the third state information is true, and the charging box 120 can feed back to the first processor 112 the fifth identification result indicative of the third state information being true. If the comparison result shows inconsistency, it means that the third state information is false, and the charging box 120 can feed back to the second processor 114 the sixth identification result indicative of the third state information being false. Here, the third identification information can be represented by the sixth identification result. In one embodiment, the fifth identification result and the sixth identification result may also be transmitted between the charging box 120 and the first processor 112 in the form of codes or pulses. For example, the fifth identification result may be transmitted in the form of "100" or one pulse. The first processor 112 may correspondingly receive the fifth identification result of" 100" or a pulse fed back by the charging box 120. The sixth identification result may be transmitted in the form of "001" or two pulses. The first processor 112 may correspondingly receive the sixth identification result of "001" or two pulses fed back by the charging box 120.

Further, the block that the second processor determines the opening/closing state information of the cover of the charging box according to the identification result comprises: the first processor instructs the second processor to identify the opening/closing state information of the cover of the charging box according to the third identification information fed back by the charging box.

In some embodiments, after the first processor obtains the third state information, the first processor sends a conversion signal to the second processor according to the third state information, and the second processor determines the opening/closing state information of the cover of the charging box according to the conversion signal. When the first processor 112 receives the third identification information represented by the fifth identification result, it means that the third state information obtained by the first processor 112 is correct, and the first processor 112 can convert the third state information to send a switch signal (for example, a high voltage level signal or a low voltage level signal) to the second processor 114 through the cover detection pin. The second processor 114 could fetch the first state information according to the received conversion signal and identify the opening/closing state information of the cover of the charging box 120 according to the first state information.

In some embodiments, the block that the second processor determines the opening/closing state information of the cover of the charging box according to the identification result comprises: the second processor identifies the opening/closing state information of the cover of the charging box according to the third identification information.

When the second processor 114 receives the third identification information represented by the sixth identification result sent by the charging box 120, it means that the third state information obtained by the first processor 112 is false. That is, the third state information obtained by the first processor cannot accurately represent the opening/closing state information of the cover of the charging box 120. The second processor 114 could determine the opening/closing state information of the cover of the charging box 120 according to the received sixth identification result. Furthermore, the sixth identification result may carry its detection information. That is, the second processor 114 may determine the opening/closing state information of the cover of the charging box 120 according to the received detection information.

In some embodiments, after receiving the detection information, the first processor 112 can actively communicate with the charging box 120, so that the charging box 120 can verify the detection information of the third state information obtained by the first processor 112 to determine whether the third state information is correct. This can improve the reliability of the second processor 114 in identifying the opening/closing state information of the cover of the charging box 120.

In order to ensure timeliness and accuracy, after the first processor obtains the detection information and obtains third state information according to the detection information, the method further comprises: sending a conversion signal to the second processor according to the third state information such that the second processor determines the opening/closing state information of the cover of the charging box according to the conversion signal. This solution enables the second processor to obtain the state information of the switch cover as soon as possible, so as to perform operations such as Bluetooth disconnection or reconnection in time. If the third state information is verified to be wrong, it can be corrected, so as to take into account the response speed of the headset and accuracy.

In some embodiments, similar operations can also be performed in other solutions. For example, under the first identification policy, when the first state information and the second state information are different, the opening/closing state information of the cover of the charging box can be firstly determined according to the second state information and then the charging box decides whether a calibration is needed after the identification operation. In another solution of the first identification policy, after obtaining the first state information, the second processor first determines the opening/closing state information of the cover of the charging box according to the first state information, so as to perform Bluetooth connection or disconnection. After the charging box verifies the first state information, the charging box determines whether a calibration is needed according to the feedback identification information.

In some embodiments, in the method for identifying the opening/closing state information of the cover of the charging box in any of the above embodiments, after the second processor 114 identifies the opening/closing state information of the cover of the charging box 120, the method further comprises: the second processor 114 sends a response message to the charging box 120, and the response message is used to indicate that the second processor 114 has determined the opening/closing state information of the cover of the charging box 120. After the second processor 114 determines the opening/closing state information of the cover of the charging box 120, the second processor 114 can send a response message to the charging box 120 to inform the charging box 120 that the earphone 110 receives the opening/closing state information of the cover of the charging box 120.

Fig. 9 is a flow chart of a method for identifying the opening/closing state of the cover of the charging box according to an embodiment of the present disclosure. The method for identifying method for identifying the opening/closing state of the cover of the charging box in this embodiment is described by taking the operation on the charging box 120 in Fig. 1 as an example. The charging box 120 could charge the earphone 110 including the first processor 112 and the second processor 114. As shown in Fig. 9, the method for identifying method for identifying the opening/closing state of the cover of the charging box comprises Blocks 902 to 904.

Block 902: detecting the opening/closing state information of the cover of the charging box and generating detection information according to the opening/closing state information of the cover of the charging box.

In some embodiments, the charging box 120 comprises a cover detection module 122, which is used to real-time detect the opening/closing state information of the cover of the charging box 120. The opening/closing state information of the cover of the charging box 120 includes the cover opening information and the cover closing information. In an embodiment, the cover detection module 122 may comprise a Hall sensor and a magnet. When the charging box 120 of the earphone 110 is opened, the magnet is far away from the Hall sensor. The opening/closing state information of the cover of the charging box 120 is determined by detecting the change of the signal of the Hall sensor. For example, the Hall sensor may be placed at the opening of the charging box 120, and a magnet may be placed at the upper cover of the charging box 120. Furthermore, in addition to detect the opening/closing state information of the cover of the charging box 120 through a Hall sensor and a magnet, any type of mechanical or electronic switch can also be used, including but not limited to momentary switches, capacitive sensors, optical sensors, micro switches. (the switching state is detected by the vibration of the charging box 120), and contact switches (the switching state is determined by detecting the contact between the upper cover and the lower part).

In some embodiments, the cover detection module 122 can generate the cover opening information after detecting that the cover of the charging box 120 is opened, and generate the detection information according to the cover opening information. The cover detection module 122 can generate the cover closing information after detecting that the cover of the charging box 120 is closed and generate the detection information according to the closing information.

Block 904: sending detection information to the earphone. The detection information is used to instruct the second processor to execute the first identification policy according to the detection information. Or, the first processor executes the second identification policy according to the detection information. The detection information is further used to instruct the second processor to determine the opening/closing state information of the cover of the charging box according to the identification result. Here, the detection information is used to represent the opening/closing state information of the cover of the charging box, and the identification result is obtained by executing the first identification policy or the second identification policy.

In an embodiment, the cover detection module 122 can generate the cover opening information after detecting that the cover of the charging box 120 is opened and send the cover opening information to the earphone 110 as the detection information. The cover detection module 122 can generate the cover closing information after detecting that the cover of the charging box 120 is closed, and send the cover closing information to the earphone 110 as detection information.

In some embodiments, the cover detection module 122 can generate the cover opening information after detecting that the cover of the charging box 120 is opened and send the cover opening information as the detection information to the first processor 112 and the second processor 114 of the earphone 110. The cover detection module 122 can generate the cover closing information after detecting that the cover of the charging box 120 is closed and send the cover closing information as detection information to the first processor 112 and the second processor 114 of the earphone 110. In one embodiment, the block that the charging box 120 may send the detection information to the earphone 110 could comprise: the charging box 120 can send the detection information to the first processor 112 and the second processor 114 respectively according to a preset timing.

For example, the charging box 120 may first send the detection information to the first processor 112. That is, the time when the charging box 120 sends the detection information to the first processor 112 is earlier than the time when the detection information is sent to the second processor 124. Or, the time when the first processor 112 receives the detection information is earlier than the time when the second processor 124 receives the detection information. The charging box 120 can send the detection information to the second processor 124 first. That is, the time when the charging box 120 sends the detection information to the second processor 124 is earlier than the time when the detection information is sent to the first processor 112. Or, the time when the second processor 124 receives the detection information is earlier than the time when the first processor 112 receives the detection information.

In another embodiment, the charging case 120 may send detection information to the first processor 112 and the second processor 114 at the same time.

The timing could be understood as the time sequence in which the charging box 120 sends the detection information to the first processor 112 and the second processor 114 respectively, or the time sequence in which the first processor 112 and the second processor 114 respectively receive the detection information.

In one embodiment, the detection information may be represented by codes or pulses and communicated between the charging box 120 and the earphone 110. When the detection information is represented by codes, it can be represented by one or a combination of numbers, letters and characters. For example, when the detection information is the cover opening information, it can be represented by 010. When the detection information is the cover closing information, it can be represented by 011. When the detection information is represented by pulses, it can be represented by different pulse numbers. For example, when the detection information is the cover opening information, it can be represented by three pulses. When the detection information is the cover closing information, it can be represented by four pulses.

In the embodiments of the present application, the form of the detection information is not limited and could be expressed in any other ways, which are not limited to the above-mentioned examples.

The first identification policy can be understood as an identification method in which the second processor 114 identifies the opening/closing state information of the cover of the charging box 120 according to the detection information. In an embodiment, the first identification policy may be that the second processor 114 receives the detection information sent by the charging box 120 and identifies the opening/closing state information of the cover of the charging box 120 according to the detection information. At the same time, the detection information received by the first processor 112 can also be acquired from the first processor 112, and the opening/closing state information of the cover of the charging box 120 can be identified according to the detection information. When executing the first identification policy, the second processor 114 may correspondingly acquire and compare the above-mentioned two state information, so as to determine the opening/closing state information of the cover of the charging box 120.

In one embodiment, the second identification policy could be that the first processor 112 identifies the opening/closing state information of the cover of the charging box 120 according to the received detection information and sends an identification request to the charging box 120 to request to verify whether the identification result is correct. When executing the second identification policy, the first processor 112 could correspondingly obtain the identification information fed back by the charging box 120 according to the identification request and instruct the second processor 114 to determine the opening/closing state information of the cover of the charging box 120 according to the identification information. In the above method for the opening/closing state information of the cover of the charging box 120, the charging box 120 detects the opening/closing state information of the cover of the charging box 120 and generates the detection information according to the opening/closing state information of the cover of the charging box, and the charging box 120 sends the detection information to the earphone 110. The detection information is used to instruct the second processor to execute the first identification policy according to the detection information. Or, the first processor executes the second identification policy according to the detection information such that the second processor determines the opening/closing state information of the cover of the charging box according to the identification information. This can avoid adding an additional sensor on the earphone 110 to detect the opening/closing state information of the cover of the charging box 120 and significantly reduces the size of the earphone 110. In addition, by including the first processor 112 and the second processor 114 in the earphone 110 to communicate with the charging box 120, the opening/closing state information of the cover of the charging box 120 can be quickly and reliably synchronized to the earphone 110, effectively ensuring the accuracy of identifying the opening/closing state information of the cover of the charging box by the earphone 110.

In one embodiment, the method for identifying the opening/closing state information of the cover of the charging box further comprises: receiving a first identification request or a second identification request sent by a second processor executing a first identification policy; verifying the first state information and/or the second state information according to the first identification request; and sending the first identification information to the first processor or the second processor. Alternatively, the method could comprise: verifying the first state information according to the second identification request; and sending the second identification information to the second processor.

In some embodiments, when the charging box 120 receives the first identification request, the charging bock could verify the authenticity of the first state information received by the second processor 114 according to the first identification request. For example, the charging box 120 compare the received first state information with the opening/closing state information of the cover of the charging box 120 detected by the box cover detection module 122. If the comparison result shows consistency, it means that the first state information is true. If the comparison result shows inconsistency, it means that the first state information is false. The charging box 120 could feed back the first identification information to the second processor 114 according to the identification result. Here, the first identification information is used to represent the authenticity of the first state information.

In some embodiments, when the charging box 120 verifies the detection information according to the first identification request and the first identification result is false, it indicates that the second processor 114 may be abnormal. The charging box 120 may send a reset command to the first processor 112, and the first processor 112 may perform a reset operation on the second processor 114 according to the reset command, so as to restore the second processor 114 to a normal state. When the second processor 114 returns to the normal state, the second processor 114 can continue to receive the first identification information fed back by the charging box 120 and can further identify the opening/closing state information of the cover of the charging box 120 according to the received first identification information. In this embodiment, the second processor 114 may send the obtained second state information to the charging box 120 to implement two-way communication with the charging box 120, so that the charging box 120 knows that the first processor 112 and the second processor 114 receive the second state information. At the same time, the second state information can also be checked to improve the accuracy of identification.

The method for identifying the opening/closing state information of the cover of the charging box further comprises: receiving a second identification request sent by a second processor and verifying the first state information according to the second identification request; when the first state information is true, feeding back the second identification information of the third identification result to the second processor; and when the first state information is false, feeding back the second identification information of the fourth identification result to the second processor. Here, the second identification information is used to instruct the second processor to identify the opening/closing state information of the cover of the charging box according to the second identification information.

Specifically, when the charging box 120 receives the second identification request, the charging box 120 could verify the authenticity of the first state information received by the second processor 114 according to the second identification request. For example, the second processor 114 can send the first state information to the charging case 120 in the form of codes or pulses, so that the charging case 120 can compare the received first state information with the opening/closing state information of the cover of the charging box detected by the cover detection module 122. If the comparison result shows consistency, it means that the first state information is true, and the charging box 120 can feed back a third identification result to the second processor 114. Here, the second identification information is represented by the third identification result.

The charging box 120 compares the received first state information with the opening/closing state information of the cover of the charging box 120 detected by the box cover detection module 122. If the comparison result shows inconsistency, it means that the first state information is false, and the charging box 120 can send a fourth identification result to the second processor 114. Here, the third identification information may be represented by the fourth identification result. Furthermore, the fourth identification result carries the detection information, and the second processor 114 can identify the opening/closing state information of the cover of the charging box 120 according to the received detection information.

The charging box 120 verifies the first state information received by the second processor 114 to determine whether the first state information received by the second processor 114 is correct, so as to improve the reliability of the second processor 114 in identifying the opening/closing state information of the cover of the charging box.

The method for identifying the opening/closing state information of the cover of the charging box further comprises: receiving a third identification request sent by the first processor executing the second policy; verifying the third state information according to the third identification request; and sending the third identification result to the first processor or the second processor.

When the charging box 120 receives the third identification request, the charging box 120 could verify the authenticity of the third state information obtained by the first processor 112 according to the third identification request. For example, the charging box 120 compares and verifies the received third state information and the opening/closing state information of the cover of the charging box 120 detected by the box cover detection module 122. If the comparison result shows consistency, it means that the third state information is true, and the charging box 120 can feed back a fifth identification result indicative of the third state information being true to the first processor 112. Here, the third identification information may be represented by a fifth identification result. If the comparison result shows inconsistency, it means that the third state information is false, and the charging box 120 can feed back to the second processor 114 the sixth identification result indicative of the third state information being false. Here, the third identification information can be represented by the sixth identification result.

When the first processor 112 receives the third identification information represented by the fifth identification result, it indicates that the third state information obtained by the first processor 112 is accurate, and the first processor 112 can perform a conversion on the third state information to send a conversion signal (e.g., a high voltage level signal or low voltage level signal) to the second processor 114 through the cover detection pin. The second processor 114 could obtain the first state information according to the received conversion signal and identify the opening/closing state information of the cover of the charging box 120 according to the first state information.

When the second processor 114 receives the third identification information represented by the sixth identification result sent by the charging box 120, it indicates that the third state information received by the first processor 112 is false. That is, the detection information received by the first processor 112 cannot accurately the opening/closing state information of the cover of the charging box 120. The second processor 114 could identify the opening/closing state information of the cover of the charging box 120 according to the received detection information.

In this embodiment, the charging box 120 could verify the third state information obtained by the first processor 112 to determine whether the third state information obtained by the first processor 112 is correct, so as to improve the identification accuracy of the second processor 114 in identifying the opening/closing state information of the cover of the charging box 120.

In order to improve the speed of obtaining the opening/closing state information of the cover of the charging box so that the second processor can efficiently perform operations such as reestablishing the Bluetooth connection or disconnecting the Bluetooth connection according to the opening/closing state information of the cover of the charging box, after obtaining the third state information, the conversion signal could be first generated based on the third state information and sent to the second processor, so that the second processor could first perform corresponding operations according to the conversion signal and then determines whether to perform corresponding adjustment after obtaining the third identification information. This could raise the response efficiency of the earphone and ensure the accuracy of identifying the opening/closing state information of the cover of the charging box.

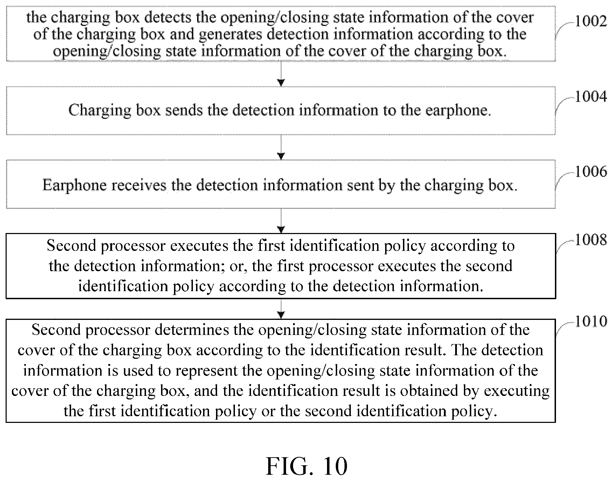

Fig. 10 is a flow chart of a method for identifying the opening/closing state of the cover of the charging box according to an embodiment of the present disclosure. The method for identifying the opening and closing cover of the charging box in this embodiment is described by taking the operation of the earphone 110 and the charging box 120 in Fig. 1 as an example. The method for identifying the opening/closing state information of the cover of the charging box comprises blocks 1002 to 1010.

Block 1002: the charging box detects the opening/closing state information of the cover of the charging box and generates detection information according to the opening/closing state information of the cover of the charging box.

Step 1004: the charging box sends the detection information to the earphone.

Step 1006: the earphone receives the detection information sent by the charging box.

Block 1008: the second processor executes the first identification policy according to the detection information; or, the first processor executes the second identification policy according to the detection information.

Block 1010: the second processor determines the opening/closing state information of the cover of the charging box according to the identification result. Here, the detection information is used to represent the opening/closing state information of the cover of the charging box, and the identification result is obtained by executing the first identification policy or the second identification policy.

Blocks 1002 and 1004 correspond to aforementioned Blocks 902 and 904, Block 1006 corresponds to aforementioned Block 204 and Block 304, and Block 1008 corresponds to aforementioned Block 206 and Block 306. Thus, further illustrations are omitted here.

The above-mentioned method for the opening/closing state information of the cover of the charging box 120 comprises: the earphone 110 receives the detection information sent by the charging box 120; the second processor executes the first identification policy according to the detection information; or, the first processor executes the second identification policy according to the detection information; and the second processor determines the opening/closing state information of the cover of the charging box according to the identification result. Here, the detection information is used to represent the opening/closing state information of the cover of the charging box, and the identification result is obtained by executing the first identification policy or the second policy. This could avoid adding an additional sensor on the earphone 110 to detect the opening/closing state information of the cover of the charging box 120, which significantly reduces the size and structural complexity of the earphone 110. In addition, by placing the first processor 112 and the second processor 114 to communicate with the charging box 120, it can quickly and reliably synchronize the opening/closing state information of the cover of the charging box 120 to the earphone 110, which effectively ensures the accuracy of the earphone 110 in identifying the opening/closing state information of the cover of the charging box 120.

Although the blocks in the flowcharts of Figs. 2-10 are shown in a sequence of arrows, it does not mean that these blocks are necessarily executed in the sequence indicated by the arrows. In other words, there is no limitation on the order of these blocks and these blocks may be performed in another order. Moreover, at least a part of the blocks in Figs. 2-10 may include multiple sub-blocks or multiple stages. These sub-blocks or stages are not necessarily executed and completed at the same time. Instead, they may be executed at different times. The order the sub-blocks or stages are not necessary to be sequentially executed. Instead, some sub-blocks/stages may be alternately performed or performed at the same time as other sub-blocks/stages of another block.

According to an embodiment of the present disclosure, an earphone 110 is disclosed. The earphone 110 comprises a first processor 112 and a second processor 114. The first processor 112 is configured to receive the detection information sent by the charging box 120. The detection information is used to represent the opening/closing state information of the cover of the charging box 120. The second processor 114 is connected to the first processor 112 and is configured to execute the first identification policy according to the detection information to identify the opening/closing state information of the cover of the charging box 120. Or, the first processor 112 is further configured to execute a second identification policy according to the detection information to identify the opening/closing state information of the cover of the charging box 120.

According to an embodiment of the present disclosure, a charging box 120 is disclosed. The charging box 120 comprises a cover detection module 122 and a third processor 124. The cover detection module 122 is used to detect the opening/closing state information of the cover of the charging box 120. The third processor 124 is configured to send the detection information to the first processor 112. Here, the detection information is used to represent the opening/closing state information of the cover of the charging box 120, and the detection information is used to instruct the second processor 114 to execute the first identification policy according to the detection information. Or, the first processor 112 executes the second identification policy according to the detection information and the detection information is further used to instruct the second processor 114 to determine the opening/closing state information of the cover of the charging box 120 according to the identification result. Here, the detection information is used to represent the opening/closing state information of the cover of the charging box 120, and the identification result is obtained by executing the first identification policy or the second identification policy.

According to an embodiment of the present disclosure, a system for identifying the opening/closing state information of the cover of the charging box 120 is disclosed. The system comprises the earphone 110 and the charging box 120 in any of the above embodiments.

According to an embodiment of the present disclosure, a computer-readable storage medium is disclosed. The computer-readable storage medium stores a computer program. The computer program could be executed by a processor, to implement the blocks of the method for the opening/closing state information of the cover of the charging box in any of the aforementioned embodiments.

According to an embodiment of the present disclosure, a computer program product is disclosed. The computer program product comprises instructions executable by a computer such that the computer performs the method for identifying the opening/closing state information of the cover of the charging box in any of the above embodiments.

Any memory, storage, database, or other medium as used herein may include non-volatile and/or volatile memory. The nonvolatile memory may include read only memory (ROM), programmable ROM (PROM), electrically programmable ROM (EPROM), electrically erasable programmable ROM (EEPROM), or flash memory. Volatile memory may include random access memory (RAM), which acts as an external cache memory. RAM may comprise static RAM (SRAM), dynamic RAM (DRAM), synchronous DRAM (SDRAM), double data rate SDRAM (DDR SDRAM), enhanced SDRAM (ESDRAM), synchronous Link (Synchlink) DRAM (SLDRAM), Memory Bus (Rambus) Direct RAM (RDRAM), Direct Memory Bus Dynamic RAM (DRDRAM), and Memory Bus Dynamic RAM (RDRAM).

Above are embodiments of the present disclosure, which does not limit the scope of the present disclosure. Any modifications, equivalent replacements or improvements within the spirit and principles of the embodiment described above should be covered by the protected scope of the disclosure.

## Claims

1. A method for identifying a cover state of a charging box, operable in an earphone comprising a first processor and a second processor coupled to the first processor, the method comprising:
receiving, by the earphone, a detection information sent by the charging box;
executing, by the second processor, a first identification policy according to the detection information and generating an identification result; and
determining, by the second processor, a cover state information of the charging box according to the identification result, wherein the detection information is configured to represent the cover state information of the charging box.

2. The method of claim 1, **characterized in that** the executing, by the second processor, the first identification policy according to the detection information comprises:
receiving, by the first processor, the detection information and sending a conversion signal to the second processor according to the detection information;
obtaining, by the second processor, a first state information according to the conversion signal;
receiving, by the second processor, the detection information to fetch a second state information; and
obtaining, by the second processor, the identification result according to the first state information and the second state information.

3. The method of claim 1, **characterized in that** the executing, by the second processor, the first identification policy according to the detection information comprises:
receiving, by the second processor, the detection information to obtain a second state information;
receiving, by the first processor, the detection information and send a conversion signal to the second processor according to the detection information;
obtaining, by the second processor, a first state information according to the conversion signal;
obtaining, by the second processor, the identification result according to the first state information and the second state information.

4. The method of claim 2 or claim 3, **characterized in that** the obtaining, by the second processor, the identification result according to the first state information and the second state information and the determining, by the second processor, the cover state information of the charging box according to the identification result comprise:
determining, by the second processor, whether the first state information is identical to the second state information; and
in response to the first state information identical to the second state information, taking, by the second processor, one of the second state information and the first state information as the cover state information of the charging box.

5. The method of claim 4, **characterized in that** the method further comprises:
in response to the first state information different from the second state information, taking, by the second processor, the second state information as the cover state information of the charging box.

6. The method of claim 4, **characterized in that** the method further comprises:
in response to the first state information different from the second state information, sending, by the second processor, a first identification request to the charging box to instruct the charging box to verify at least one of the second state information and the first state information received by the second processor to feed back a first identification information according to the identification result, and determining, by the second processor, the cover state information of the charging box according to the first identification information fed back by the charging box.

7. The method of claim 6, **characterized in that** the first identification information comprises at least one of a first identification result and a second identification result; wherein the first identification result represents the charging box verifying an authenticity of the second state information, and the second identification result represents the charging box verifying an authenticity of the first state information; and the determining, by the second processor, the cover state information of the charging box according to the first identification information fed back by the charging box comprises:
determining, by the second processor, the cover state information of the charging box according to at least one of the first identification result and the second identification result.

8. The method of claim 6, **characterized in that** the method further comprises a following step before the determining, by the second processor, the cover state information of the charging box according to the first identification information fed back by the charging box:
receiving, by the first processor, a reset instruction sent by the charging box, wherein the reset instruction is generated by the charging box when the charging box determines that the second state information is false; and
performing, by the first processor, a reset operation on the second processor according to the reset instruction so that the second processor receives the first identification information.

9. The method of claim 1, **characterized in that** the first processor and the second processor receive the detection information sent by the charging box according to a preset timing.

10. The method of claim 1, **characterized in that** the executing, by the second processor, the first identification policy comprises:
obtaining, by the first processor, the detection information and sending a conversion signal to the second processor according to the detection information;
obtaining, by the second processor, a first state information according to the conversion signal, and sending a second identification request to the charging box to instruct the charging box to verify an authenticity of the first state information and feed back a second identification information;
and the determining, by the second processor, the opening/closing state information of the cover of the charging box according to the identification result comprises:
identifying, by the second processor, the cover state information of the charging box according to the second identification information fed back by the charging box.

11. The method of claim 10, **characterized in that** the second identification information comprises a third identification result indicative of the first state information being true and a fourth identification result indicative of the first state information being false; and the identifying, by the second processor, the cover state information of the charging box according to the second identification information fed back by the charging box comprises:
identifying, by the second processor, the cover state information of the charging box according to one of the third identification result and the fourth identification result.

12. A method for identifying a cover state of a charging box, operable in an earphone comprising a first processor and a second processor coupled to the first processor, the method comprising:
receiving, by the earphone, a detection information sent by the charging box;
executing, by the first processor, a second identification policy according to the detection information to generate an identification result; and
determining, by the second processor, a cover state information of the charging box according to the identification result, wherein the detection information is used to represent the cover state information of the charging box.

13. The method of claim 12, **characterized in that** the executing, by the first processor, the first identification policy according to the detection information comprises:
receiving, by the first processor, the detection information to fetch a third state information; and
sending, by the first processor, a third identification request to the charging box to instruct the charging box to verify an authenticity of the third state information and feed back a third identification information to the first processor or the second processor according to an identification result;
and the determining, by the second processor, the cover state information of the charging box according to the identification result comprises:
instructing, by the first processor, the second processor to identify the cover state information of the charging box according to the third identification information fed back by the charging box; wherein the third identification information received by the first processor is a fifth identification result indicative of the third state information being true.

14. The method of claim 12, **characterized in that** the executing, by the first processor, the second identification policy according to the detection information comprises:
receiving, by the first processor, the detection information to fetch a third state information; and
sending, by the first processor, a third identification request to the charging box to instruct the charging box to verify an authenticity of the third state information and feedback a third identification information to the first processor or the second processor according to an identification result;
and the determining, by the second processor, the state information of the switch cover of the charging box according to the identification result comprises:
identifying, by the second processor, the switch cover state information according to the third identification information; wherein the third identification information received by the second processor is a sixth identification result indicative of the third state information being false.

15. The method of claim 13 or claim 14, **characterized in that** the method further comprises:
after the obtaining, by the first processor, the third state information,
sending a conversion signal to the second processor according to the third state information; and
determining, by the second processor, the cover state information of the charging box according to the conversion signal.

16. A method for identifying a cover state of a charging box, operable in an earphone comprising a first processor and a second processor coupled to the first processor, the method comprising:
detecting a cover state information of the charging box and generating a detection information according to the cover state information; and
sending the detection information to the earphone, where the detection information is used to instruct the second processor to execute a first identification policy according to the detection information or to instruct the first processor to execute a second identification policy according to the detection information; wherein the detection information is further used to instruct the second processor to determine cover state information of the charging box according to an identification result; wherein the detection information is used to represent cover state information of the charging box; and the identification result is obtained by executing one of the first identification policy and the second identification policy.

17. The method of claim 16, **characterized in that** the sending the detection information to the earphone comprises:
sending the detection information to the first processor and the second processor according to a predetermined interval of time.

18. The method of claim 16, **characterized in that** the sending the detection information to the earphone comprises:
simultaneously sending the detection information to the first processor and the second processor.

19. The method of claim 16, **characterized in that** the method further comprises:
receiving a first identification request sent by the second processor executing the first identification policy; and
verifying at least one of a first state information and a second state information according to the first identification request and sending a first identification information to one of the first processor and the second processor.

20. The method of claim 16, further comprising:
receiving a second identification request sent by the second processor executing the first identification policy; and
verifying a first state information according to the second identification request and sending a second identification information to the second processor.

21. The method of claim 16, further comprising:
receiving a third identification request sent by the first processor executing the second identification policy; and
verifying a third identification request according to the first identification request and sending a third identification information to one of the first processor and the second processor.

22. An earphone, comprising:
a first processor, configured to receive a detection information sent by a charging box, wherein the detection information is used to represent a cover state information of the charging box; and
a second processor, connected to the first processor, configured to execute a first identification policy according to the detection information, and to determine the cover state information of the charging box according to the identification result;
wherein the identification result is obtained by the second processor executing the first preset identification policy.

23. An earphone, comprising:
a first processor, configured to receive a detection information sent by a charging box and execute a second identification policy according to the detection information; wherein the detection information is used to represent a cover state information of the charging box; and
a second processor, connected to the first processor, configured to determine the cover state information of the charging box according to an identification result;
wherein the identification result is obtained by the first processor executing the second identification policy.

24. A charging box, configured to charge an earphone comprising a first processor and a second processor coupled the first processor, the charging box comprising:
a cover detection module, configured to detecting a cover state information of the charging box; and
a third processor, configured to send a detection information to the first processor, wherein the detection information is used to represent the cover state information of the charging box and to instruct the second processor to execute one of a first identification policy or to instruct the first processor to execute a second identification policy according to the detection information; the detection information is further configured to instruct the second processor to determine the cover state information of the charging box according to an identification result; and the identification result is obtained by executing one of the first identification policy and the second identification policy.

25. A system of identifying a cover state of a charging box, comprising an earphone as claimed in claim 22 or claim 23 and a charging box as claimed in claim 24.

26. A computer readable storage medium, storing computer program executable by a processor to perform operations comprising:
receiving, by an earphone, a detection information sent by the charging box;
executing, by a second processor, a first identification policy according to the detection information; and
determining, by the second processor, a cover state information of the charging box according to an identification result, wherein the detection information is used to represent the cover state information of the charging box, and the identification result is acquired by executing the first identification policy.

27. A computer readable storage medium, storing computer program executable by a processor to perform operations comprising:
receiving, by an earphone, a detection information sent by the charging box;
executing, by a first processor, a second identification policy according to the detection information; and
determining, by the second processor, a cover state information of the charging box according to an identification result, wherein the detection information is used to represent the cover state information of the charging box, and the identification result is acquired by executing the second identification policy.
